Europäisches Patentamt

European Patent Office

Office européen des brevets

(11) Publication number: **0 133 781**
**A1**

(12) **EUROPEAN PATENT APPLICATION**

(21) Application number: **84305120.2**

(22) Date of filing: **27.07.84**

(51) Int. Cl.⁴: **G 01 N 30/46**

(30) Priority: **12.08.83 US 522828**

(43) Date of publication of application:
**06.03.85 Bulletin 85/10**

(84) Designated Contracting States:
**DE FR GB IT**

(71) Applicant: **DIONEX CORPORATION**
**1228 Titan Way**
**Sunnyvale California 94086(US)**

(72) Inventor: **Slingsby, Rosanne Williamson**
**5144 Greentree Court**
**Pleasanton California 84566(US)**

(72) Inventor: **Pohl, Christopher Andrew**
**326 Burke Drive**
**Hayward California 94544(US)**

(74) Representative: **Allard, Susan Joyce et al,**
**BOULT, WADE & TENNANT 27 Furnival street**
**London EC4A 1PQ(GB)**

(54) **Method and apparatus for mobile phase ion chromatography and membrane suppression.**

(57) A mobile liquid phase including an ion exchange site-forming compound is directed through a porous hydrophobic chromatographic separation medium without permanently attached ion exchange sites. Such compounds include a hydrophobic counter-ion opposite in charge to the ionic species to be separated, which form reversible adsorptive bonds with the chromotographic medium. The effluent from the chromatographic medium is contacted with a membrane separating a compartment for the effluent and one for a regenerant. The membrane includes exchangeable ions capable of converting the co-ions of the ion exchange site forming compound to weakly ionized form. The ionic species are detected, suitably by a conductivity detector.

EP 0 133 781 A1

./...

FIG.—1

-1-

## METHOD AND APPARATUS FOR MOBILE PHASE ION
## CHROMATOGRAPHY AND MEMBRANE SUPPRESSION

The present invention relates to the separation and detection of ions using mobile phase ion chromatography and ion suppression.

One form of conventional ion chromatography comprises the use of two ion-exchange columns in series, followed by a flow-through conductivity detector. The first column separates the ions of injected sample by elution of the sample through the column using an electrolyte eluent. In the second column, termed a "suppressor", the electrical conductivity of the electrolyte in the eluent, but not of the separate ionic species, is suppressed so that the ionic species can be determined by a conductivity cell. This technique is described, for example, in U.S. Patent Nos. 3,897,213; 3,920,397; 3,925,019; and 3,926,559. The disclosures of such patents are incorporated herein by reference.

One form of ion chromatography is designated mobile phase ion chromatography, sometimes referred to herein by the term "MPIC". In contrast to the aforementioned ion chromatography system, the ionic species to be separated are directed in a mobile phase through a separating column comprising a porous hydrophobic chromatographic medium, typically a resin bed, with essentially no permanently attached ion exchange sites. The mobile phase includes an ion exchange site-forming compound including a counter-ion of opposite charge to the ionic species, and having a hydrophobic moiety. This counter-ion reversibly adsorbs to the chromatographic medium to create ion exchange sites and to cause the ionic species to be differentially retarded and chromatographically resolved as they elute from the bed. In a conventional system, the effluent from separation is directed through a suppressor column including an ion exchange resin of a type which is capable of converting the ion exchange site-forming compounds to weakly ionized form.

Another aspect of the system revolves around a related but different theoretical mechanism in which the counter-ion and the ionic species form reversible ionic pairs which are reversibly adsorbed onto the chromatographic medium for differential retardation and chromatographic separation. This theory best explains the separation of long chain organic molecules, such as surfactants. A description of the above system of MPIC is set forth in U.S. Patent 4,265,634, incorporated herein by reference.

One disadvantage of MPIC is that the resin bed suppressor columns of the prior art limit the number of samples which can be consecutively analyzed because such suppressor column is rapidly exhausted during flow of the electrolyte.

An improved membrane fiber suppressor has been developed which allows for continuous analysis of consecutive samples without periodic regeneration or replacement of the suppressor column. One such column is described in published European patent application 32,770, in which a charged membrane, typically in the form of a fiber, is used in place of the resin bed. The sample and eluent are passed through the fiber with a flowing regenerant at the outside wall of the fiber. The fiber comprises an ion exchange membrane partitioning of the regenerant from the effluent of chromatographic separation. The membrane passes ions of the same charge as the exchangeable ions of the membrane to convert the electrolyte of the eluent to weakly ionized form, followed by the detection of the ions. This system of suppression will be referred to herein as "membrane suppression".

The aforementioned membrane suppression system is described in that application for use with conventional ion chromatography, that is, in which the separation medium comprises a resin with permanently attached ion exchange sites. Even though it is known that for certain ionic species MPIC is superior to this type of separation, there is no disclosure in the above European application that the fiber suppressor could be used in MPIC. This is possibly because the conventional membranes available for membrane suppression were not suitable for use with the effluent from MPIC. Conversion of the counter-ions from MPIC to weakly ionized form according to the European application would require transporting the counter-ions from the effluent across the membrane into the regenerant, and transporting hydronium or hydroxide ions in the reverse direction. Typical counter-ions used in MPIC are too large to be transported across such conventional membranes. In addition, in a conventional eluent for MPIC, polar organic compounds are utilized which would attack the conventional membranes. Another possible reason why the use of membrane suppression was not utilized in combination with MPIC is that no one conceived of a combined apparatus for MPIC and fiber suppression.

We have now developed a combination method and apparatus for MPIC followed by selective suppression of the electrical conductivity of the counter-ion of the ion site-forming compound in the eluent, but not the separated ions thereof, and a system of the foregoing type capable of continuous analysis of consecutive samples without the periodic regeneration or replacement of the suppression device.

The invention relates to improved method and apparatus for mobile phase ion analysis including an eluent reservoir, chromatographic separating means, and a membrane suppressor for electrolyte in the effluent from separation.

The method of chromatographic separation is that of MPIC set forth in the background of the invention and described in detail in U.S. Patent No. 4,265,634. Specifically, the ionic species to be separated are directed in a mobile phase through a first separating column comprising a porous hydrophobic chromatography medium with essentially no permanently attached ion exchange sites. Typical media include reverse phase chromatography stationary media and hydrophobic porous organic resin beds. The mobile phase includes an ion exchange site-forming compound with a counter-ion which reversibly adsorbs to the chromatographic substrate, to create ion exchange sites and to cause the ionic species to be differentially retarded and chromatographically resolved in the eluent from the bed. The eluent also includes co-ions of the counter-ions and preferably a substantially non-ionic organic polar compound and an inorganic developing ion, both of which can be employed to adjust the column for optimum separation of the ions to be analyzed.

The sample stream containing the separated ionic species is then passed through a suppressor means comprising a regenerant compartment, an effluent compartment, and an ion-exchange membrane separating the compartments. The membrane is selectively permeable to ions of the same charge as the exchangable ions of the membrane, and is in a form to convert co-ions of the ion exchange site-forming compound to a weakly ionized form.

The system of the present invention is highly versatile, as it may be employed to determine a large number of strong and/or weak organic and/or inorganic ionic species, so long as the species to be determined are solely cationic or anionic. Suitable samples include surface waters, including salt water, and other liquids such as industrial chemical waste streams, body fluids, beverages such as fruit juices and wines, and drinking water. When the term "ionic species" is used herein, it includes species in ionic form and components of molecules which are ionizable under the conditions of the present process. It is noted that the MPIC chromatographic separation stage to which the invention is applicable is described in the aforementioned U.S. Patent No. 4,265,634.

The present invention will be further described with reference to the single Figure of the drawings which is a schematic representation of apparatus useful in performing the present invention.

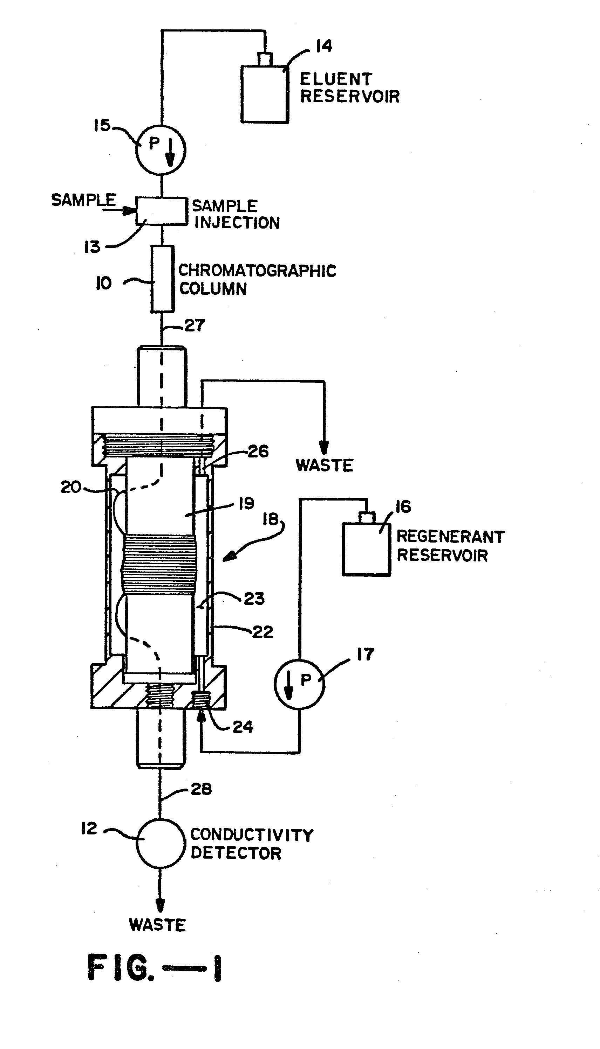

Referring to Figure 1, a simplified apparatus for performing the present invention is illustrated. The system includes chromatographic separation means 10 comprising a porous hydrophobic chromatographic medium with essentially no permanently attached ion exchange sites, typically a particulate resin bed. Arranged in series with column 10 is suppressor means 11 for suppressing the conductivity of the eluent but not the conductivity of the separated ions.

The effluent from suppressor means 11 is directed to a detector for detecting the resolved ionic species eluting therefrom, preferably in the form of a flow-through conductivity cell 12. A suitable sample is supplied to sample injection valve 13 which is swept through the apparatus by the solution of eluent from eluent reservoir 14 drawn by pump 15, and then is passed through the sample injection valve 13. (Alternatively, the pump may be eliminated in a gravity flow system.) The solution leaving column 10 is directed to suppressor means 11, wherein the electrolyte is converted to a weakly ionized form. The effluent with separated ionic species is then treated by suppressor means 11 and passed to conductivity cell 12.

In conductivity cell 12, the presence of ionic species produces an electrical signal proportional to the amount of ionic material. Such signal is typically directed from this cell 12 to a conductivity meter, not shown, thus permitting detection of the concentration of separated species.

The suppressor means includes a reservoir or source of regenerant 16, a chromatographic pump 17, and an ion exchange membrane device 18. Conduits are provided between the reservoir and membrane device to deliver regenerant to the latter.

A suitable membrane device is supplied by Dionex Corporation, Sunnyvale, California, under the designation Cation Fiber Suppressor (part No. 35352). Briefly summarized, the membrane device comprises essential core 19 around which the present tubing, designated fiber 20, is wound in a coil of a sufficient number of turns (e.g., 6 ft.) to provide adequate contact with the fiber walls for permeation of ions between the regenerant and sample. A shell 22 encloses core 19 and forms therewith a regenerant passageway or chamber 23. The chamber receives regenerant through regenerant inlet 24, and the regenerant is discharged to waste through regenerant outlet 26. Column effluent flows through the fiber 20 downwardly from membrane inlet 27, through the coil and out membrane outlet 28. In operation, suppressor means 12 operates by receiving the effluent from the separating column 10, which flows through the interior of the fiber of suppressor column 18. Simultaneously, solution from reservoir 16 is pumped in a generally counterflow direction into regenerant inlet 24, and removed from regenerant outlet 26 to waste. The ion exchange site-forming component of the eluent is thus neutralized by ion exchange reaction with the fiber walls, while the fiber wall is continuously regenerated by the counterflowing regenerant.

The mode of separation in column 10 may be explained by two different theoretical mechanisms known as the "ion pair" theory and the "reversible ion exchange" theory. The latter theory is assumed herein. For simplicity of description, inorganic anions will first be described as the ionic species in the sample to be separated and quantitated. The mobile phase for the sample includes an ion exchange site-forming compound. This compound is comprised of a counter-ion of opposite charge to the ionic species to be resolved, and a co-ion of the same charge as the ionic species. (Herein, the term "counter-ion" used alone refers to the last named counter-ion, and the term "co-ion" used by itself refers to the co-ion of that counter-ion.) A porous hydrophobic chromatographic bed with essentially no permanently attached ion exchange sites is contained in separation column 13. This is to distinguish from conventional ion exchange resin, in which the ion exchange sites are permanently attached by covalent bonding to the resin substrate.

In accordance with the reversible ion exchange theory, the counter-ion is of a type which forms reversible adsorptive bonds in situ in the chromatographic bed to create ion exchange sites therein. In this manner, the ionic species are differentially retarded by the thus formed ion exchange sites, and are chromatographically resolved in the effluent from this bed. The inorganic anions to which the present technique is applicable include essentially all types of anionic species, from those weakly to strongly retained on the chromatographic bed. For example, the following anions may be separated: fluoride, chloride, nitrite, nitrate, chlorate, perchlorate, bromide, bromate, iodide, iodate, sulfate, thiosulfate, persulfate, pyrosulfate, phosphate, pyrophosphate, azide, cyanide, ferricyanide, and thiocyanate ions.

A variety of reverse phase chromatographic stationary phases may be employed, as of the type set forth in N.H.C. Cooke and K. Olsen, Am. Lab., 45 (August, 1979). One effective type of chromatographic medium comprises hydrocarbon chains bonded to a substrate. Such chains are typically 8 to 18 carbons in length. Such chemically bonded alkyl phases are commonly produced by the reaction of surface silica silanols with organochlorosilanes. A typical bonded-phase porous silica gel packing is sold by Waters Associates, Inc., under the trade designation Bondapak $C_{18}$. Other suitable resins are supplied by Altex Corporation and Merck & Co., Inc.

A particularly effective stationary phase is a non-ionic, porous, hydrophobic organic resin with essentially no permanently attached ion exchange-sites. One such resin is a copolymer of styrene and divinylbenzene available under the trademark Amberlite XAD-2 with a surface area of about 300 $M^2$/g. Such resins are stable at pH extremes, e.g., 1-14, in comparison to the bonded phase packings described above which are less stable at pH extremes. Another suitable type of resin is disclosed in U.S. Patent No. 4,224,415. A particularly effective organic resin is one available in a separator column sold by Dionex Corporation of Sunnyvale, California, under the designation MPIC-NS1. This is a macroporous resin of 10 micron particle size and divinyl benzene-ethylvinyl benzene copolymer composition, having a 100,000 molecular weight size exclusion limit.

Other non-ionic hydrophobic porous organic resins may be utilized for the separation if they have sufficient surface area and hydrophobicity. Typical minimum surface areas are about 10 $M^2/g$ to 1000 $M^2/g$ or more. Typical pore sizes range from 30 angstroms to 200 angstroms.

Referring again to anion analysis, suitable ion exchange site-forming compounds include: tetrabutylammonium hydroxide (TBAH), and mono-, di-, tri- and tetraalkyl ammonium hydroxide. The counter-ions for inorganic anion analysis must be of opposite charge to the anions and be of a type capable of forming reversible adsorptive bonds with the chromatographic bed. For this purpose, such counter-ions typically include organic chains, specifically alkyl chains, of sufficient length for ready adsorption on the column, but not so long as to be too difficult for removal in a reasonable period of time. (Also, the ion exchange site-forming compound must be capable of being exchanged across the membrane (e.g. the wall of fiber 20)substantially in ionic form.) The co-ion of the counter-ion are selected to pass through the membrane device in substantially unionized form. Such co-ions include carbonate, borate and hydroxide, all of which form weakly ionized acids or water in the suppressor column.

The degree of adsorption of counter-ion determines the column capacity, which can be tailored to the desired retention time for a particular sample by the use of controlled amounts of an organic polar compound. For example, the degree of adsorption of TBAH increases significantly as the organic polar liquid (e.g., acetonitrile) content decreases. (The ion exchange site forming compounds must be of a type formed of a counter-ion capable of being exchanged across the membrane and a co-ion capable of substantially being precluded from exchange across the membrane suppressor device.) For the analysis of cations suitable counter-ions for this purpose include the anions of $C_1$-$C_{20}$ alkyl sulfuric acid, such as lauryl sulfuric acid, or alkyl or aryl sulfonic acid. An electrolyte developing reagent is present in the eluent, serving its conventional function in ion chromatography.

A preferable component of the mobile phase is a substantially non-ionic, organic polar compound in an amount which serves to selectively reduce the retardation time of the ionic species in the separation bed in a controlled manner. Suitable organic polar compounds include lower alcohols, such as methanol and ethanol, acetonitrile, or any water miscible organic solvent.

The suppressor means, membrane device 18, treats the effluent from separation

0133781

-8-

and includes an ion-exchange membrane partitioning the regenerant from the effluent. The membrane is preferentially permeable to ions of the same charge as the exchangeable ions of the membrane. The exchangeable ions of the membrane are in the ion form necessary to convert the ion exchange site-forming compounds and the developing reagent of the eluent to a weakly ionized form. (The counterion of the ion exchange site -- forming compound is exchanged across the membrane and thus is removed from the eluent while the co-ion (hydrogen or hydroxide) is formed into water.) In operation, the effluent from the separating medium is contacted with the membrane, which is permeable to ions of the same charge as the exchangeable ions of the membrane, and which resist permeation therethrough of ions of the opposite charge. The membrane is simultaneously contacted on its other side with the regenerant so that the membrane forms a permselective partition between the regenerant and eluent. Ions extracted from the effluent at the active ion-exchange sites of the membrane are diffused through the membrane and are exchanged with ions of the regenerant, and thus diffused ultimately into the regenerant. The exchangeable ions of the ion exchange membrane are in the form necessary to convert the ion exchange sites of the eluent to a weakly ionized form. Thereafter, the resolved ionic species are detected, as with the conductivity detector set forth above.

Referring to anion analysis, the membrane is typically a strong-acid cation exchange membrane (negatively charged), preferably with sulfonic acid functional groups, and which is typically in the form of the hydrogen (hydronium) ion form. In this form, the membrane is permeable to cations but not anions. The permeating cations are captured at the active ion exchange sites of the membrane, and thus diffused through the membrane. The diffusing ions are eventually exchanged near the opposite surface of the membrane with ions from the regenerant, and thus ultimately diffused into the regenerant, and are removed from the separator column effluent. The membrane continually replaces the extracted cations (e.g. TBA+) with like charged ions (e.g. H+) which suppress the conductivity of the ion exchange site-forming compounds (by forming water in the eluent) and developing reagent in the eluent. While the membrane is continuously being exhausted, it is simultaneously continuously regenerated by the ion-exchange reactions occurring adjacent to the interface of the regenerant and the membrane.

Ion-exchange membranes having the permselective ion transfer properties set out above are known for other uses in the art. Certain of such membranes are described by R.M. Wallace, "Concentration and Separation of Ions by Donnan Membrane Equilibration", I&EC Process Design and Development, 6 (1967). As described in the aforementioned European patent application, such membranes may be in the form of a flat sheet or one or more hollow fibers. Typically, the fibers have an internal bore size less than about 1000 microns. One suitable fiber which has been used commercially for suppression is supplied by DuPont under the trade name Nafion, and has been utilized by Dionex Corporation in its fiber suppressor devices used for conventional ion chromatography. For analysis of anions, the fiber suppressor is typically sulfonated while for cation analysis, the fiber suppressor is typically aminated.

While the above type of membrane is suitable for suppression of the effluent of conventional ion chromatography, as set forth above, it may not be suitable for MPIC because certain polar organic compound used in MPIC tends to attack the above type of membrane. Thus, the membrane useful for the present invention must be stable in the presence of the polar organic compounds used during MPIC. Some of the conventional membranes are not sufficiently stable for this purpose. In addition, the counter-ions used in MPIC are larger than the typical electrolyte to be suppressed in ion chromatography. For example, for anion analysis, a the preferred counter-ion is TBA ion, having an approximate size of 10 angstroms. (As used herein, size refers to approximate effective ionic radius in aqueous solutions at 25°C.) In contrast, it has been found that Nafion, the membrane previously used, will pass tetramethylammonium hydroxide (6 angstrom size), but not tetrapropylammonium hydroxide (8 angstrom size). Thus, for anion analysis, it is preferable to use a membrane capable of passing ions of a size greater than 6 to 8 angstrom.

A stable membrane capable of transporting ions of a size even greater than 7 angstroms, and preferably greater than 10 angstroms, has been developed which is capable of transporting the TBA ion in a reasonable period of time. This renders the membrane useful for suppression since the TBA ions are transported across the membrane during use in a typical anion analysis as set out below. In one technique for forming this ion exchange membrane, intravenous tubing used by hospitals is employed as a base material, such as supplied under the tradename Microline by Thermoplastic Scientifics, Inc., of Warren, New Jersey. This particular membrane is a copolymer of 91% ethylene and 9% vinyl acetate, dimension of 0.011 in. I.D. and 0.024 in. O.D. A monomer, suitably styrene is grafted onto this tubing to render it suitable for conversion to ion exchange form. Thereafter, the grafted tubing is sulfonated as set forth in the examples for use as an anion fiber.

A suitable technique for grafting is by irradiation of the tubing in a solution of the monomer in an organic solvent such as methylene chloride. A suitable concentration of monomer and solvent ranges from 32% to 70%, and preferably 30% to 45%. An appropriate irradiation dose is 10,000 rad/hour of gamma rays at a time of 72 hours to 400 hours, and a temperature of 80° to 90°F under an inert atmosphere such as nitrogen. A suitable technique for forming this membrane is set forth in Slingsby, R., and Pohl, C., European Patent Application entitled "Analysis of Liquid Streams Using Tubing With Protuberances on its Inner Wall", filed simultaneously herewith. (BWT Reference - EA 1256).

The following is a generalized scheme illustrating separation of anions in accordance with the present invention. A TBAH eluent including acetonitrile as a polar organic compound is flowed with a sample of anions through a porous hydrophobic medium such as an organic resin. The hydrophobic portion of the TBA ion is adsorbed to the medium, creating an ion exchange site wherein the sample anions are differentially retarded in a manner analogous to ion chromatography with permanently attached ion exchange sites.

Thereafter, the effluent from MPIC separation flows through the hollow portion of the permselective fiber, which has been functionalized by sulfonation to include the strong acid (sulfonate) cation-exchanging sites. Dilute alkylbenzenesulfonic acid is utilized as a flowing regenerant stream flowing past the outside surface of the fiber. The sulfonated fiber allows the positively charged tetrabutylammonium ion to pass from within the fiber, across the membrane and into the regenerant side. Similarly, the hydrogen ion of the alkylbenzylsulfonic acid on the regenerant side passes into the fiber. Hydroxide and sulfonate ions tend not to permeate the fiber wall because of Donnan exclusion forces. Thus, the TBAH stream is converted to deionized water and the TBA ions permeate the wall of the membrane and are dispersed in the regenerant, and thus ultimately routed to waste as a sulfonate salt.

The above system, which has been described primarily in terms of anion separation, may also be utilized for cation separation with a reversal of each of the charges in the eluent, at the ion exchange sites of the membrane wall, and in the regenerant. Any suitable cation for which MPIC is useful may be employed. Typical cations which may be analyzed include alkyl amines. In the analysis of cations, the ion exchange forming compounds must be of a type formed of a counter-ion and co-ion capable of suppression in the membrane device in an analogous manner to that set out above. Suitable counter-ions for this purpose include: lauryl sulfuric acid, and $C_1$-$C_{20}$ alkyl sulfuric acid or sulfonic acid. The ion exchange site-forming compounds form hydrophobic and reversible bonds with the neutral resin in a manner analogous to the aforementioned. Interaction between the site-forming compound and the amine cations is sometimes termed an "ion-pair" interaction.

Cation suppression is performed in an analogous manner to anion suppression, but using a reverse charge. Thus, the membrane is positively charged, including amine groups. In this manner, the negatively charged sulfonates pass through the membrane and form salts in the regenerant side of the column which are passed to waste. The hydroxide on the regenerant side passes in a reverse direction into the effluent side of the membrane forming water with the hydronium counter-ion in the fiber.

A further disclosure of the nature of the invention is provided by the following specific examples of its practice.

Example 1

This example illustrates formation of a membrane in the form of a fiber useful in the present invention. Tubing is supplied under the name Microline by Thermoplastic Scientifics, Inc. The base polymer is a copolymer of 91% ethylene and 9% vinyl acetate, cross-linked 40% to 65%. The average molecular weight is 190,000, with an average carbon number of 14,200 and a glass transition temperature above $80^{\circ}C$. The dimensions of the tubing are 0.011 in. I.D. x 0.024 in. O.D. Styrene monomer is grafted onto the tubing by irradiation with gamma rays at a dose of 10,000 rad/hour for 120-200 hours.

A sulfonated anion fiber is formed by taking the above grafted fiber and swelling it in methylene chloride for 10 min. The tubing is functionalized by sulfonation by filling with a solution of 3% chlorosulfonic acid in methylene chloride, and soaking at room temperature.

To form the aminated cation fiber, the tubing is swelled and then filled with a solution of 15% weight/weight methyldiethanolamine in methylene chloride. The tubing is aminated by refluxing at 45°C for 48 hours at a ratio of 20 ml solution per foot of swelled grafted tubing.

## Example 2

This example illustrates anion analysis in accordance with the present invention. The sample includes 20 ppm of I⁻ and 20 ppm of SCN⁻. The separator column includes a macroporous divinyl benzene-ethylvinylbenzene copolymer resin sold under the trademark MPIC-NS1 by Dionex Corporation of Sunnyvale, California. This product has a 10 micron particle size and a 100,000 molecular weight size exclusion limit. The product is packed in a column 4 mm I.D. x 250 mm.

The aqueous eluent includes 2 mM TBAH and 22% acetonitrile. The eluent flow rate is 1.0 ml/min.

The effluent from the above separation column is passed to a membrane device as described above using a sulfonated fiber of the type set forth in Example 1. The regenerant comprises an aqueous solution of 20 mM alkylbenzene sulfonic acid at a flow rate of 3.0 ml/min.

The above product is passed to the conductivity cell of a conductivity detector. A chromatogram is formed with two distinct peaks for the sample ionic species.

## Example 3

This example illustrates the analysis of alkylamines in accordance with the present invention. The sample includes 1 ppm of monomethylamine, 2 ppm of dimethylamine, and 10 ppm of trimethylamine.

The same separator column as set forth in Example 2 is employed. The eluent comprises an aqueous solution of 2 mM hexanesulfonic acid and 2% acetonitrile. The eluent flow rate was 1.0 ml/min.

The effluent from separation is passed through a fiber suppressor comprising an aminated polyethylene vinylacetate-vinylbenzylchloride material formed as set forth in Example 1. The regenerant comprises 20 mM tetramethylammonium hydroxide at a flow rate of 2.2 ml/min.

After suppression, the product is passed through the conductivity cell of a conductivity detector. Three distinct peaks are formed for the three ionic species.

CLAIMS:

1.    A method of chromatographic separation and analysis of at least a first and second ionic species of ionizable compounds in a mobile liquid phase, all of the ionic species being of a positive or negative charge, comprising the steps of:

(a)    directing the mobile liquid phase, including an ion exchange site-forming compound, through separation means including a porous, hydrophobic chromatographic separation medium with essentially no permanently attached ion exchange sites, the ion exchange site-forming compound including counter-ions of opposite charge to the ionic species and having a hydrophobic moiety, and also including co-ions of the same charge as the ionic species, so that the counter-ions form reversible adsorptive bonds with the chromatographic medium to create ion exchange sites thereon, and so that the first and second ionic species are differentially retarded by the ion exchange sites and are chromatographically resolved in the effluent from the separation means, the effluent also including counter ions and co-ions; and

(b)    contacting the effluent from step (a) with one side of an ion exchange membrane permeable to ions of the same charge as the exchangeable ions of the membrane and permeable to the counter-ions, and which resists permeation through the membrane of ions of opposite charge, and simultaneously contacting the opposite side of the membrane with a regenerant, the membrane forming a perm-selective partition between the regenerant and the effluent, the exchangeable ions of the ion exchange membrane being capable of converting the co-ions of the ion exchange site-forming compound to weakly ionized form; and

(c)    detecting the separated ionic species in the effluent after conversion of the co-ions.

2.    A method as claimed in Claim 1 in which the detection is performed by measurement of the conductivity of the effluent.

3.     A method as claimed in Claim 1 or Claim 2 in which the counter-ions are diffused through the membrane to the regenerant side of the membrane and are exchanged with suppression ions on the regenerant side which are diffused into the effluent side.

4.     A method as claimed in Claim 3 in which the ionic species are positively charged and the suppression ions comprise hydroxide ions.

5.     A method as claimed in Claim 3 in which the ionic species are negatively charged and the suppression ions comprise hydronium ions.

6.     Apparatus for the chromatographic separation and analysis of ionic species in a mobile liquid phase, including hydrophobic counter-ions opposite in charge to the ionic species, all of the ionic species being of a positive or negative charge, the apparatus comprising:

(a)     chromatographic separation means for separating ionic species in the presence of an electrolyte, and comprising a porous hydrophobic chromatographic medium with essentially no permanently attached ion exchange sites, the medium being capable of forming reversible adsorptive bonds with hydrophobic moieties in the mobile liquid phase;

(b)     means for supplying the mobile liquid phase to the chromatographic separation means;

(c)     suppression means communicating with the separating means for treating effluent eluting therefrom, the suppression means comprising a regenerant compartment, an effluent compartment and an ion-exchange membrane separating the compartments, the membrane being selectively permeable to ions of the same charge as the exchangeable ions of the membrane, the membrane being in a form to convert the co-ions of the ion exchange site-forming compound of the eluent to a weakly ionized form, and

(d)     detector means in communcation with the suppressor means for detecting the ionic species eluting therefrom.

7.     Apparatus as claimed in Claim 6 in which the membrane is capable of transporting ions of a size greater than 7 angstroms between the regenerant compartment and effluent compartment.

8.  Apparatus as claimed in Claim 6 in which the detector means comprises a conductivity detector.

9.  Apparatus as claimed in Claim 6 in which the membrane is stable in the presence of polar organic compounds in the mobile liquid phase.

10.  Apparatus as claimed in Claim 6 in which the membrane comprises one or more hollow fibres.

FIG. —1

| DOCUMENTS CONSIDERED TO BE RELEVANT | | | EP 84305120.2 |
|---|---|---|---|
| Category | Citation of document with indication, where appropriate, of relevant passages | Relevant to claim | CLASSIFICATION OF THE APPLICATION (Int Cl 4) |
| D,X | <u>EP - A2 - 0 032 770</u> (DIONEX) <br> * Page 2, line 22 - page 18, line 21; claims * <br> -- | 1-10 | G 01 N 30/46 |
| D,A | <u>US - A - 4 265 634</u> (C.A. POHL) <br> * Column 3, line 30 - column 9, line 7; claims * <br> -- | 1,2,4, 5,8,9 | |
| A | <u>EP - A1 - 0 038 720</u> (DIONEX) <br> ---- | | |
| | | | TECHNICAL FIELDS SEARCHED (Int. Cl.4) <br><br> G 01 N <br> B 01 D |

The present search report has been drawn up for all claims

| Place of search <br> VIENNA | Date of completion of the search <br> 31-10-1984 | Examiner <br> TENGLER |
|---|---|---|